# EUROPÄISCHE PATENTSCHRIFT

(11) **EP 1 360 031 B1**
(45) Veröffentlichungstag und Bekanntmachung des Hinweises auf die Patenterteilung: **15.09.2004**
(21) Anmeldenummer: 02714015.1
(22) Anmeldetag: 15.02.2002
(51) Int. Cl.: B23Q 1/56, F16C 29/02, F16S 3/04, F16B 7/04

(54) **SCHLITTENSYSTEM FÜR EINEN PROFILSTAB**
SLIDER SYSTEM FOR A PROFILED BAR
SYSTEME DE COULISSE POUR UNE BARRE PROFILEE

(30) Priorität: 15.02.2001 DE 20102661 U
(43) Veröffentlichungstag der Anmeldung: 12.11.2003
(73) Patentinhaber: FMS Förder- und Montage-Systeme Schmalzhofer GmbH, 75031 Eppingen-Mühlbach (DE)
(72) Erfinder: SCHMALZHOFER, Rainer, 75031 Eppingen-Kleingartach (DE)
(74) Vertreter: Clemens, Gerhard, Dr.-Ing.
(86) Internationale Anmeldenummer: PCT/DE2002/000545
(87) Internationale Veröffentlichungsnummer: WO 2002/064309

(56) Entgegenhaltungen:
- EP-A- 0 136 431
- EP-A- 0 482 268
- DE-A- 3 830 607
- DE-A- 19 815 474
- DE-U- 8 620 533
- US-A- 5 429 438

## Beschreibung

### TECHNISCHES GEBIET

Die vorliegende Erfindung betrifft ein Schlittensystem für einen Profilstab, insbesonder stranggepressten Leichtmetallstab, der in vorgegebenen Systemquerschnittsachsen in seiner jeweiligen oder zumindest einer Außenseite eine hinterschnittene Längsnut mit einer vorgegebenen Nutbreite aufweist, mit zumindest einem in Profilstablängsrichtung verschieblich an den Profilstab angeschlossenen Schlittenprofil.

Derartige Profilstäbe sind häufig wesentlicher Bestandteil von Aluminium-Profilsystemen für den Maschinenbau. Dabei werden zunehmend Linear- und Führungssysteme integriert und eingebaut.

### STAND DER TECHNIK

Die DE-A- 198 15 474 offenbart ein Schlittensystem gemäß Oberbegriff des Anspruchs 1.

Aus der EP-0 258 714 B1 ist ein Führungssystem für Aluminium-Profile bekannt, bei dem eine gehärtete Führungswelle auf die Profile aufgeklemmt wird. Über einen rollengelagerten Schlitten wird eine lineare Führungseinheit gebildet. Dieses System ist technisch sehr aufwendig und daher teuer und zudem in der Führungsgenauigkeit im Wesentlichen von der Genauigkeit beziehungsweise Geradheit der Profile selbst abhängig.

Aus der US 5,429,438 ist ein Führungssystem mit Kunststoff-Führungs- und Gleitelementen bekannt, bei dem die Schlitten ohne ein Nutsystem und ohne Kammerungen für die Führungselemente aufgebaut sind. Dies erfordert einen hohen Aufwand für die Bearbeitung der Schlitten und der Führungselemente. Darüber hinaus ist die Kombinationsmöglichkeit dieses Systems beschränkt.

### DARSTELLUNG DER ERFINDUNG

Ausgehend von dem genannten Stand der Technik liegt der vorliegenden Erfindung die Aufgabe beziehungsweise das technische Problem zugrunde, ein einfaches und kostengünstiges, auf vorhandene Profilsysteme passendes Führungs- beziehungsweise Schlittensystem anzugeben, das die Nachteile der vorhandenen Systeme vermeidet und eine hohe Anwendungsvariabilität sowie eine vielfältige Kombinationsmöglichkeit für Anwender zur Verfügung stellt. Darüber hinaus sollen bei montierten Schlitten Systemmaße für die Nute vorhanden sein, die mit den Systemmaßen des Grundsystems korrespondieren. Weiterhin sollen Kombinationen mit Profilsystemen mit unterschiedlichen Systemmaßen möglich sein.

Das erfindungsgemäße Schlittensystem ist durch die Merkmale des unabhängigen Anspruchs 1 gegeben.

Vorteilhafte Ausgestaltungen und Weiterbildungen sind Gegenstand der abhängigen Ansprüche.

Bei dem erfindungsgemäßen Schlittensystem ist demgemäß zumindest ein Schlittenprofil vorhanden, das zumindest eine hinterschnittene Innenlängsnut aufweist, die bei an den Profilstab angeschlossenem Schlittenprofil in einer der Systemquerschnittsachsen angeordnet ist, und zumindest ein Gleitführungsprofil, das eine Längsnut des Profilstabes und die entsprechende gegenüberliegende Innenlängsnut des Schlittenprofils hintergreift.

Das Schlittenprofil auf der der Innenlängsnut gegenüberliegenden Außenseite weist zumindest eine hinterschnittene Außenlängsnut auf.

Um zu einem möglichst kompakten Profilquerschnitt zu gelangen, ist die Kontur, das heißt die Breite und auch die Höhe, der Innenlängsnut des Schlittenprofils geringer als die Kontur, das heißt die Breite und die Höhe, der Längsnut des Profilstabes.

Um systemkonforme Anschlussmöglichkeiten auch am Schlittenprofil zur Verfügung zu stellen, entspricht die Kontur, das heißt die Breite und die Höhe, der Außenlängsnut des Schlittenprofils der Kontur, das heißt der Breite und der Höhe, der Längsnut des Profilstabes.

Das Schlittenprofil ist als U-Profil ausgebildet mit zumindest einer Innennut am Steg und zumindest jeweils einer Innennut an den Flanschen des Schlittenprofils oder alternativ als L-Profil mit zumindest einer Innenlängsnut pro Schenkel, wobei an jedem Schenkel des L-förmigen Schlittenprofils zumindest eine Außenlängsnut vorhanden ist.

Um eine hohe Variabilität zu gewährleisten, zeichnet sich eine besonders vorteilhafte Ausgestaltung dadurch aus, dass das Rastermaß benachbarter Innenlängsnute dem Rastermaß benachbarter Außenlängsnute entspricht.

Eine besonders vorteilhafte Weiterbildung zeichnet sich dadurch aus, dass an dem Schlittenprofil oberseitig und/oder unterseitig zumindest ein weiteres Schlittenprofil längsverschieblich angeordnet ist. Dadurch ist es möglich, teleskopierbare Profilsysteme zur Verfügung zu stellen, deren Teleskopierlänge beliebig variiert werden kann.

Um zu wirtschaftlich einsetzbaren Gleitführungsprofilen zu gelangen, ist es besonders vorteilhaft, diese im oberen und unteren Querschnittsbereich als Nutensteinprofil auszubilden, wobei die die Gleitführungsprofile bevorzugt aus Kunststoff ausgebildet sind. Das Nutsteinprofil ist dabei so ausgebildet, dass es die entsprechende Nut am Profilstab oder Schlitten hintergreift.

Eine besonders bevorzugte Ausgestaltung zeichnet sich dadurch aus, dass im Stegbereich des Gleitführungsprofils zwischen dem oberen und unteren Querschnittsbereich jeweils ein nach links und rechts weisendes Vorsprungprofil angeformt ist, dessen Dicke je nach zugrundelegendem Grundsystem unterschiedlich ist.

Eine die Variabilität hinsichtlich der Konstruktion umsetzende Ausführungsvariante zeichnet sich dadurch aus, dass der Profilstab als Rechteck- oder Quadratprofil ausgebildet ist und ein L-förmiges Schlittenprofil am oberen rechten und/oder oberen linken und/oder unteren rechten und/oder unteren linken Eckbereich des Profilstabes längsverschieblich angeordnet ist. Alternativ kann das Schlittenprofil als U-förmiges Profil ausgebildet sein, das oberseitig und/oder unterseitig am Profilstab längsverschieblich angeordnet ist. Dabei können mehrere übereinander angeordnete U-Profile eingesetzt werden.

Weiterhin ist es möglich, zwischen den Schlittenprofilen Koppelungsprofile einzusetzen, die die Verschiebebewegungen der jeweiligen Schlittenprofile miteinander koppelt.

Eine alternative Ausgestaltung zeichnet sich dadurch aus, dass das Schlittenprofil als schmales Rechteckprofil ausgebildet ist.

Eine besonders wirtschaftliche Umsetzung ist dadurch gekennzeichnet, dass das Schlittenprofil als stranggepresstes Leichtmetallprofil ausgebildet ist.

Die erfindungsgemäßen Schlittenprofile haben an der Außenseite systemkonforme Außennute, welche in Systemabstände bestehender Profilstabsysteme oder im ganzzahligen Verhältnis zur Aufnahme von Befestigungselementen angeordnet sind. Durch die Ausbildung der Außenlängsnut als System-Nut können die in dem Profilsystem vorhandenen Standard-Verbinder und Standard-Elemente eingesetzt werden, was die Wirtschaftlichkeit des Systems weiter erhöht.

Auf der Innenseite der Schlittenprofile sind jeweils auf den Mittelachsen der Nuten der Standardprofile entsprechende Innenlängsnute vorhanden, in denen spezielle Gleitführungsprofile verankert werden.

Die maßliche Abstufung der Schlittenprofile ist so vorgenommen, dass auch die Schlittenprofil-Außenkontur den Standard-Profilabmessungen entspricht, so dass auch die Schlittenprofile untereinander teleskopartig angeordnet werden und mit gleichen Gleitführungselementen längsverschieblich aneinandergebaut werden können. Durch eine Anordnung der Führungsschlitten auf den Standard-Profilen als Einfach- oder Doppel-Schlitten ergibt sich im Zusammenspiel mit den teleskopartig einsetzbaren Schlittenprofilen eine Vielzahl von Anordnungs- und Kombinationsmöglichkeiten.

In einem bevorzugten Ausführungsbeispiel ist die Innenkontur der Schlittenprofile beispielsweise so gewählt, dass sich eine Kombinationsmöglichkeit mit dem jeweils passenden Standard-Profil im Systemmaß 40 (Millimeter) umsetzen lässt. Die gewählte Kontur ist jedoch auch für Kombinations- und Einsatzmöglich-keiten für Systemprofile mit anderen Systemmaßen, beispielsweise 45 und 50 (Millimeter), möglich. So können beispielsweise an ein U-förmiges Schlittenprofil mit einer Breite B = 80 mm Profile mit den Systemmaßen 40 x 40 oder 45 x 45 angeschlossen werden. Die L-förmigen Schlittenprofile können beispielsweise problemlos mit 40 x 40, 45 x 45 oder 50 x 50 Profilen kombiniert werden.

Eine vorteilhafte Kombinierbarkeit umsetzende Ausführungsvariante zeichnet sich dadurch aus, dass an dem Profilstab eine Kombination von L-förmigen und/oder U-förmigen und/oder rechteckförmigen Schlittenprofilen angeordnet ist.

Das Gleitführungsprofil besteht aus einem speziellen Gleitkunststoff mit einer hohen Festigkeit und einem geringen Reibungskoeffizient, so dass hohe Belastungen mit einer geringen Reibkraft übertragen werden können.

Das erfindungsgemäße Schlittensystem ist wirtschaftlich herstellbar, garantiert eine einfache, dauerhaft funktionelle Lösung für Linear-Aufgaben an Profilsystemen, weist eine hohe Flexibilität hinsichtlich seiner Einsetzbarkeit an Profilstäben auf und kann insbesondere bereits bei bestehenden Profilsystemen problemlos nachgerüstet werden, da die gewählten Rastermaße mit den Rastermaßen bestehender Profilstäbel kompatibel ausgebildet sind.

Weitere Ausführungsformen und Vorteile der Erfindung ergeben sich durch die in den Ansprüchen ferner aufgeführten Merkmale sowie durch die nachstehend angegebenen Ausführungsbeispiele.

### KURZE BESCHREIBUNG DER ZEICHNUNG

Die Erfindung sowie vorteilhafte Ausführungsformen und Weiterbildungen derselben werden im Folgenden anhand der in der Zeichnung dargestellten Beispiele näher beschrieben und erläutert. Es zeigen:
- Fig. 1: schematischer Querschnitt durch einen quadratischen Profilstab mit U-förmigem Schlittenprofil,
- Fig. 2: schematischer Querschnitt durch einen quadratischen Profilstab mit mehreren, aufeinander angeordneten U-förmigen Schlittenprof ilen,
- Fig. 3: schematischer Querschnitt durch einen rechteckförmigen Profilstab mit oberseitig und unterseitig angeordnetem U-förmigen Schlittenprofil,
- Fig. 4: schematischer Querschnitt durch einen rechteckförmigen Profilstab mit oberseitig und unterseitig jeweils mehreren übereinander angeordneten U-förmigen Schlittenprofilen,
- Fig. 5: schematische Detailperspektive eines L-förmigen Schlittenprofils,
- Fig. 6: schematische Detailperspektive eines U-förmigen Schlittenelements,
- Fig. 7: schematische Detailperspektive des Profilstabes mit U-förmigem Schlittenprofil gemäß Fig. 1 mit dargestellten Slide-Führungsprofilen,
- Fig. 8: schematische Detailperspektive eines rechteckförmigen Profilstabes mit jeweils im oberen rechten und linken Eckbereich längsverschieblich über ein Gleitführungsprofil angeschlossenem L-förmigen Schlittenprofil,
- Fig. 9a bis 9d: stark schematisierte Darstellung unterschiedlichster Anordnungen von L-förmigen Schlittenprofilen an Profilstäben,
- Fig. 10a bis 10c: stark schematisierte Darstellung der unterschiedlichsten Anordnungsmöglichkeiten von U-förmigen Schlittenprofilen an Profilstäben,
- Fig. 11: schematische Darstellung der Anordnung eines rechteckförmigen Schlittenprofils,
- Fig. 12: schematische Detailperspektivdarstellung des Gleitführungsprofils gemäß Fig. 8,
- Fig. 13a bis 13m: schematische Schnittdarstellung des Anschlusses unterschiedlicher Schlittenprofile an unterschiedliche Systemprofilstäbe, wobei die Systemprofilstäbe ein Rastermaß von 40 mm (Millimeter) oder ein Vielfaches davon aufweisen,
- Fig. 14a bis 14i: schematische Schnittdarstellung des Anschlusses unterschiedlicher Schlittenprofile an unterschiedliche Systemprofilstäbe, wobei die Systemprofilstäbe ein Rastermaß von 45 mm (Millimeter) oder ein Vielfaches davon aufweisen,
- Fig. 15a, b: vergrößerte Darstellung der Fig. 13g und 14f in Gegenüberstellung der unterschiedlichen Systemmaße,
- Fig. 16a bis c: schematische Schnittdarstellung teleskopierbarer Schlittenprofile, angeordnet an unterschiedlichen Systemprofilstäben, wobei die Gleitführungsprofile nicht dargestellt sind.

### WEGE ZUM AUSFÜHREN DER ERFINDUNG

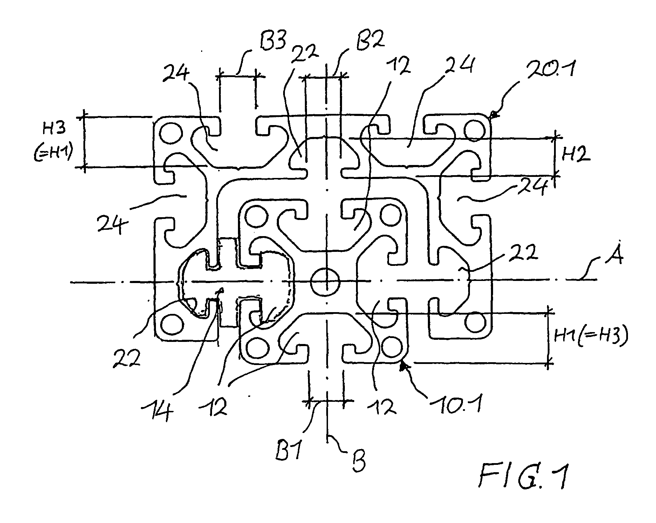

In Fig. 1 ist ein Profilstab 10.1 dargestellt, der als quadratisches Standard-Leichtmetallprofil ausgebildet ist. In den Systemachsen A, B, die gleichzeitig Symmetrieachsen sind, ist auf jeder Außenseite eine hinterschnittene Längsnut 12 eingeformt.

Auf den Profilstab 10 ist oberseitig ein U-förmiges Schlittenprofil 20.1 längsverschieblich angeordnet, das die Oberseite und die beiden Seitenwände des Profilstabes 10.1 umgibt. Sowohl der Profilstab 10.1 als auch das Schlittenprofil 20.1 sind als stranggepresste Aluminiumprofile ausgebildet.

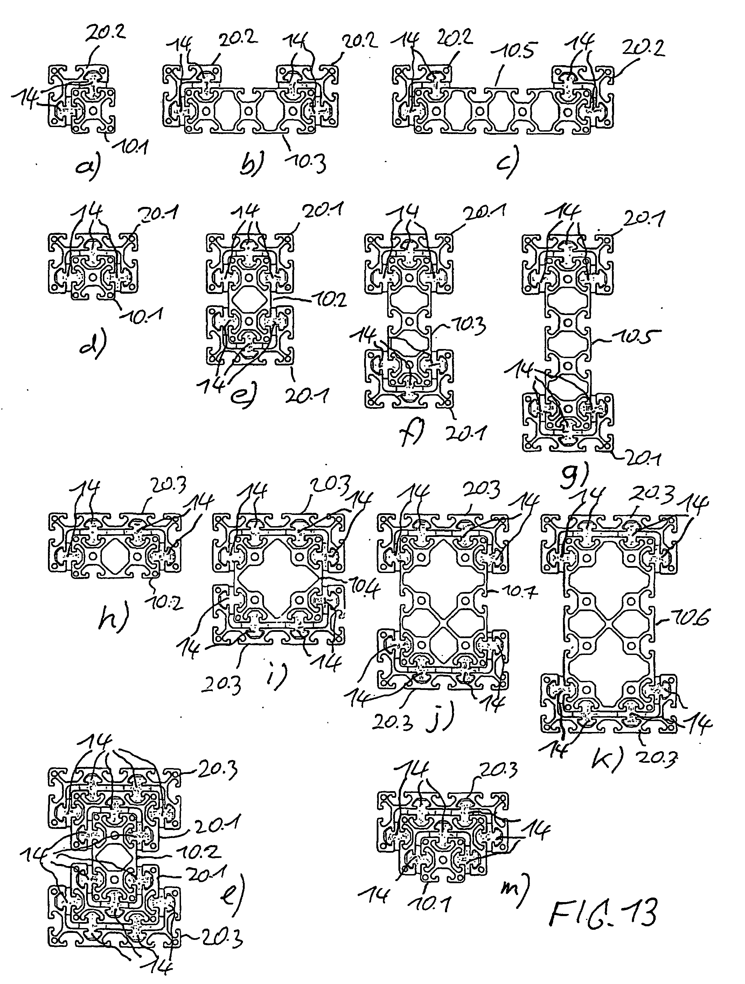

Das Schlittenprofil 20.1 weist, korrespondierend zu den Längsnuten 12 des Profilstabes 10.1, in den Systemachsen A beziehungsweise B innenseitig jeweils eine der jeweiligen Längsnut 12 gegenüberliegende hinterschnittene Innenlängsnut 22 auf. In jeder Innenlängsnut 22 mit entsprechender Längsnut 12 des Profilstabes 10.1 ist ein Gleitführungsprofil 14 (gestrichelte Darstellung in Fig. 1) angeordnet, das in Fig. 7, die eine Detailperspektivdarstellung der Anordnung gemäß Fig. 1 darstellt, eingesetzt vorhanden ist. Versetzt zu den Innenlängsnuten 22 sind auf der Außenseite des Schlittenprofils 20.1 hinterschnittene Außenlängsnute 24 eingeformt. Dabei ist in den Schenkeln des U-förmigen Schlittenprofils 20.1 jeweils eine Außenlängsnut 24 und in dem Steg des U-förmigen Schlittenprofils 20.1 zwei Außenlängsnute 24 eingeformt.

Die Längsnuten 12 des Profilstabes 10.1 weisen eine Breite B1 und eine Höhe H1 (Fig.1) auf. Die Breite B3 und die Höhe H3 der Außenlängsnute 24 des Schlittenprofils 20.1 entspricht der Breite B1 beziehungsweise der Höhe H1 der Längsnuten 12, so dass für den Anwender einheitliche Verbindungselemente am Profilstab 10.1 und am Schlittenprofil 20.1 auch bei aufgesetztem Schlittenprofil 20.1 zum Anschließen weiterer Komponenten vorhanden sind. Die Breite B2 und die Höhe H2 der Innenlängsnute 22 ist geringfügig kleiner gewählt als die Breite B1 der Längsnuten 12, damit auch am Schlittenprofil 20.1 die Standard-Rastermaße hinsichtlich der Anschlussmöglichkeiten wie bei den bekannten Profilsystemen umgesetzt werden können. Es ist auch möglich, 1 die Innennut konturmäßig entsprechend den Nuten 12 des Profilstabes 10.1 auszubilden. Im dargestellten Ausführungsbeispiel sind die Nutbreiten B1 und B3 so gewählt, dass Profile aus der Profilserie mit dem Systemmaß 40 x 40 (Millimeter) eingesetzt werden können. Die Breite B2 der Innennute ist für den Einsatz von Profilen aus der Profilserie 30 x 30 (Millimeter) geeignet.

Wie aus Fig. 7 ersichtlich, ist das Gleitführungsprofil 14 jeweils in die sich gegenüberliegenden Längsnuten 12 beziehungsweise Innenlängsnute 22 eingeführt, das in seinem oberen und unteren Querschnittsbereich jeweils eine Nutensteinkontur 30, 32 aufweist (siehe auch Fig. 12). Das Gleitführungsprofil 14 besteht aus einem Kunststoff mit geringem Gleitreibungskoeffizienten. Zwischen den Nutensteinprofilen 30, 32 ist auf beiden Seiten des Steges 34 des Gleitführungsprofils 14 ein rechteckförmiges Vorsprungprofil 36 angeformt. Das Vorsprungprofil 36 besitzt einen rechteckförmigen Querschnitt. Die Dicke h1, h2 des Vorsprungprofils 36 kann dabei unterschiedlich sein. Dadurch ist es möglich, ein und dasselbe Schlittenprofil bei Systemgrundstäben einzusetzen, die unterschiedliche Systemgrundmaße, zum Beispiel 40 mm (Millimeter ) und 45 mm (Millimeter) aufweisen. Das/die Gleitführungsprofil/e 14 ist/sind in nicht näher dargestellter Art und Weise am Profilstab 10, ... oder am Schlittenprofil 20, ... lösbar fixiert.

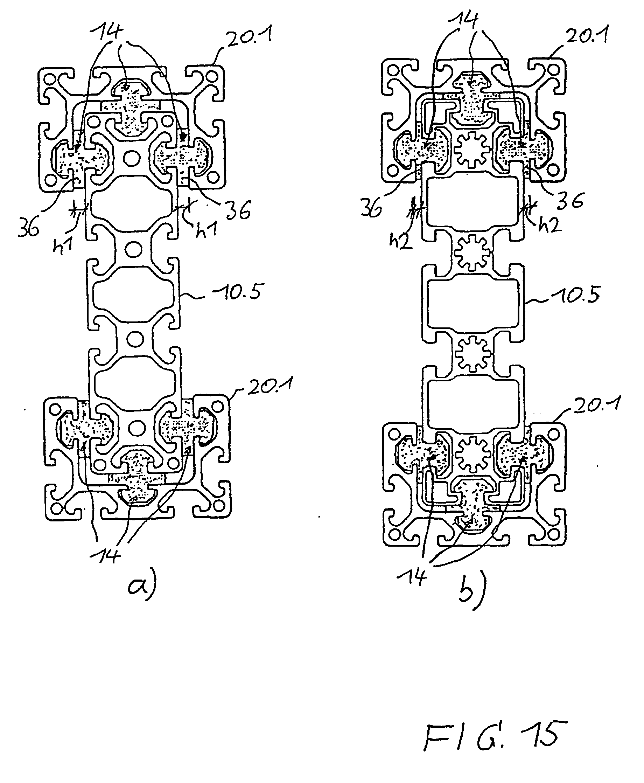

Dies wird anhand der Figuren 15a und b weiter unten beschrieben.

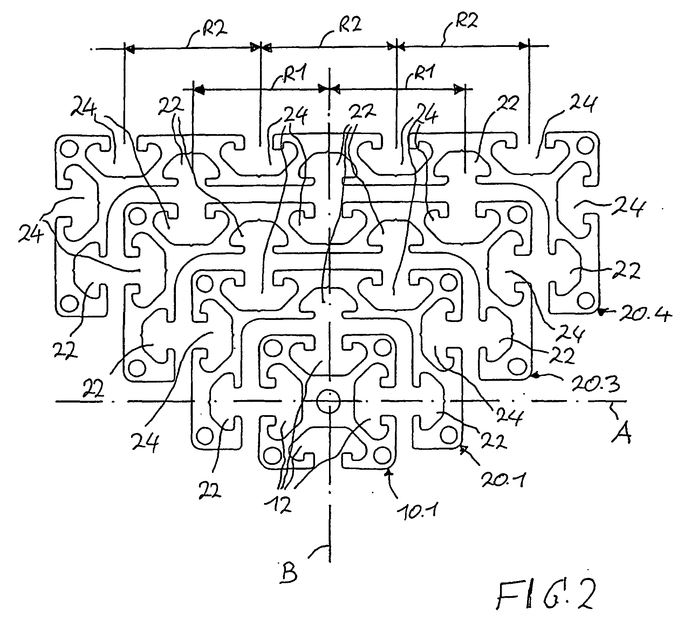

In Fig. 2 ist im Querschnitt schematisch der Profilstab 10.1 mit dem Schlittenprofil 20.1 gemäß Fig. 1 dargestellt, ergänzt jedoch um oberseitig zwei weitere Schlittenprofile 20.3 beziehungsweise 20.4. Die Schlittenprofile 20.3, 20.4 weisen ebenfalls Innenlängsnuten 22 und Außenlängsnuten 24 auf. Die Innenlängsnute 22 sind in einem Rastermaß R1 angeordnet. Die Außenlängsnute 24 sind in einem Rastermaß R2 angeordnet. Die Rastermaße R1 beziehungsweise R2 sind dabei so gewählt, dass eine Außenlängsnut 24 beispielsweise des Schlittenprofils 20.3 bei aufgesetztem Schlittenprofil 20.4 der entsprechenden Innenlängsnut 22 gegenüberliegt. In Fig. 2 sind Gleitführungsprofile, die das Schlittenprofil 20.1 mit dem Profilstab 10.1, das Schlittenprofil 20.3 mit dem Schlittenprofil 20.1 und das Schlittenprofil 20.4 mit dem Schlittenprofil 20.3 verbinden, nicht dargestellt. Das Rastermaß R1 und R2 sind im dargestellten Ausführungsbeispiel gleich groß gewählt. Insgesamt ist das Rastermaß R2 so bemessen, dass es zu den Systemabmessungen bekannter Profilstabsysteme passt.

Die in Fig. 2 dargestellte Ausführungsform ermöglicht problemlos die Umsetzung teleskopierbarer Führungsbeziehungsweise Linearsysteme.

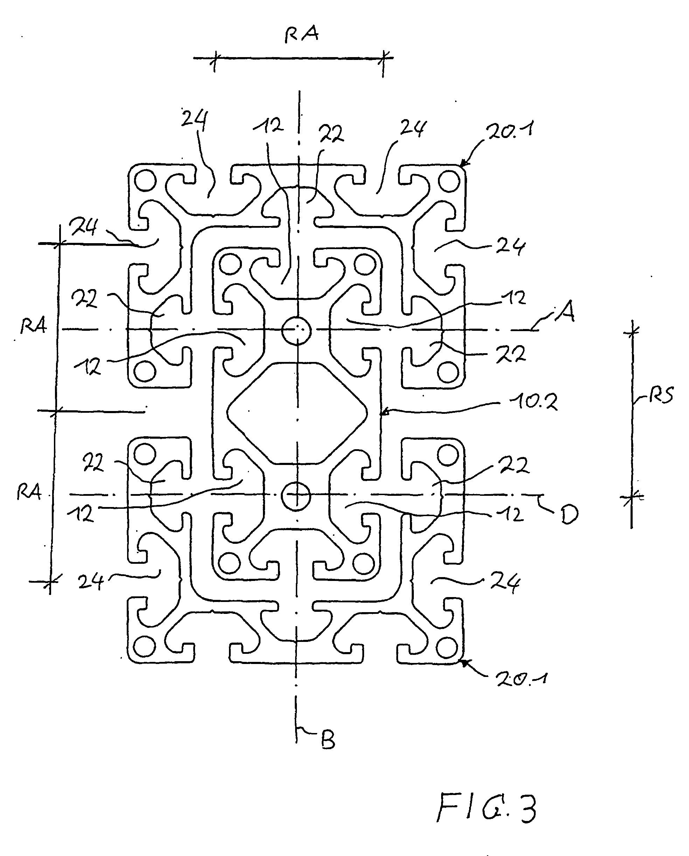

Fig. 3 zeigt schematisch im Querschnitt einen hochkant angeordneten rechteckförmigen Profilstab 10.2, der auf seinen beiden Außenseiten jeweils zwei hinterschnittene Längsnute 12 aufweist. Die Längsnute sind mit dem Rastermaß RS parallel beabstandet vorhanden. Die vertikale Systemachse ist mit B und die horizontalen Systemachsen sind mit A, D bezeichnet. An dem Profilstab 10.2 ist im oberen Bereich und im unteren Bereich jeweils die Schlitteneinheit 20.1, die bereits anhand von Fig. 1 beschrieben worden ist, längsverschieblich angeordnet. Die benötigten Gleitführungsprofile sind in Fig. 3 nicht näher dargestellt. Die oberen Außennute 24 der Schlitteneinheit 20.1 sind in einem Rastermaß RA parallel beabstandet vorhanden, das dem Rastermaß RS des Profilstabes 10.2 entspricht. Die seitlichen Außennute der oberen und unteren Schlitteneinheit 20.1 weisen das Rastermaß 2x RA auf. Dadurch wird auch bei angeschlossenen Schlitteneinheiten 20.1 das Grundrastermaß RS des Profilsystems beibehalten. Eine vollständige Kompaktibilität zu den Maßen des Grundprofilsystems ist gewährleistet.

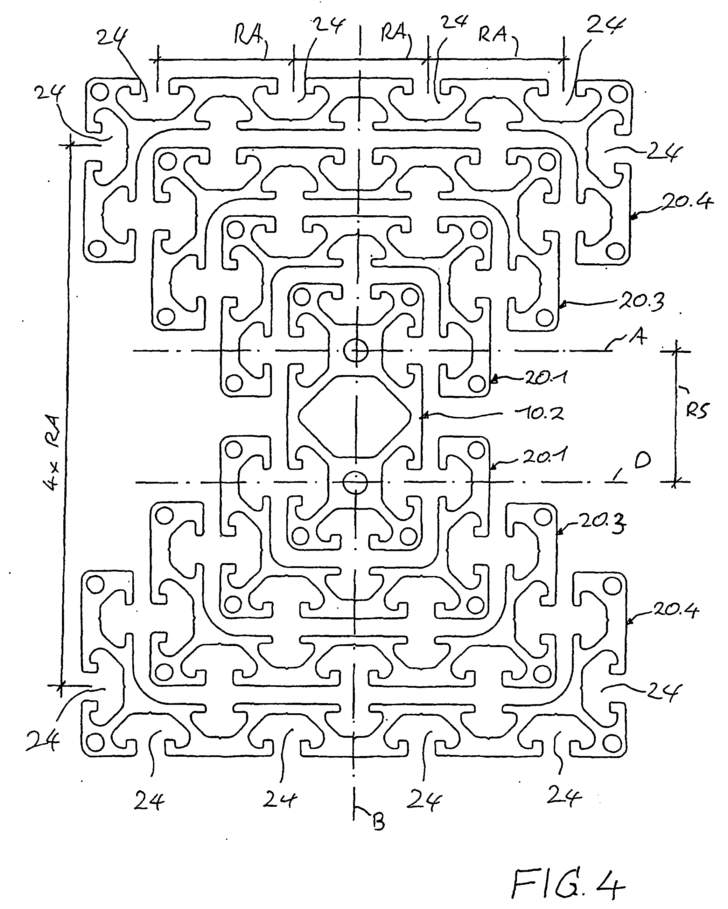

Fig. 4 zeigt den Profilstab 10.2 gemäß Fig. 3, wobei oberseitig und unterseitig insgesamt jeweils drei aufeinander beziehungsweise untereinander angeordnete Schlittenprofile 20.1, 20.3, 20.4 angeordnet sind. Auch bei dieser Ausführungsform sind die Rastermaße RA der Außennute der äußeren Schlitteneinheit 20.4 mit dem Systemrastermaß RS des Grundprofilstabes gleich oder ein Vielfaches davon.

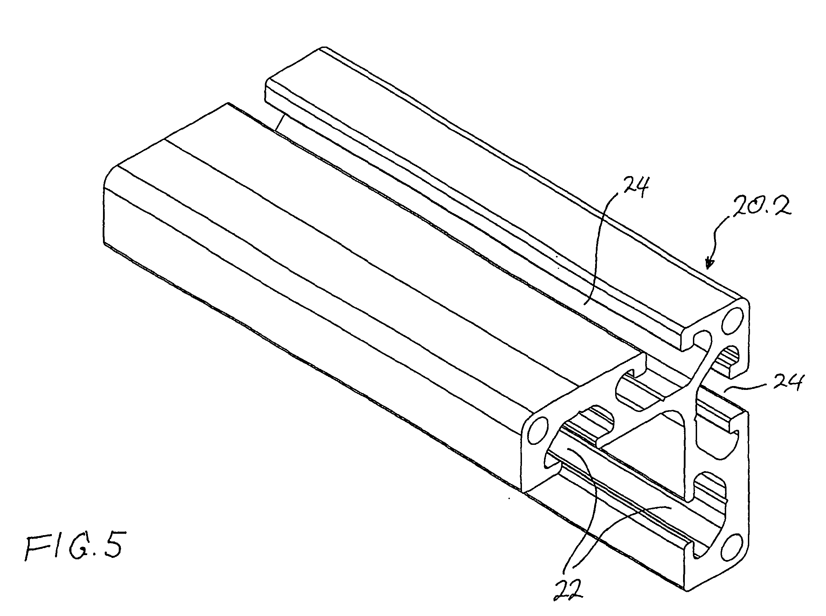

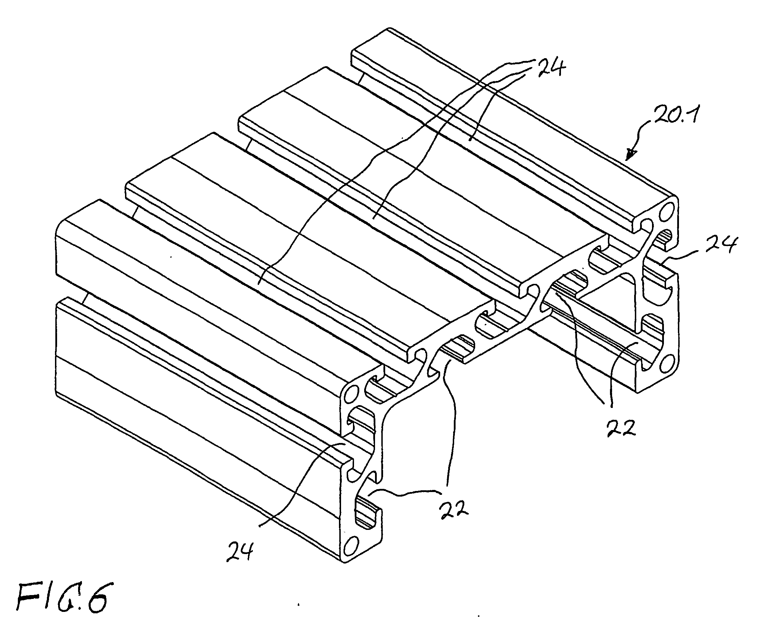

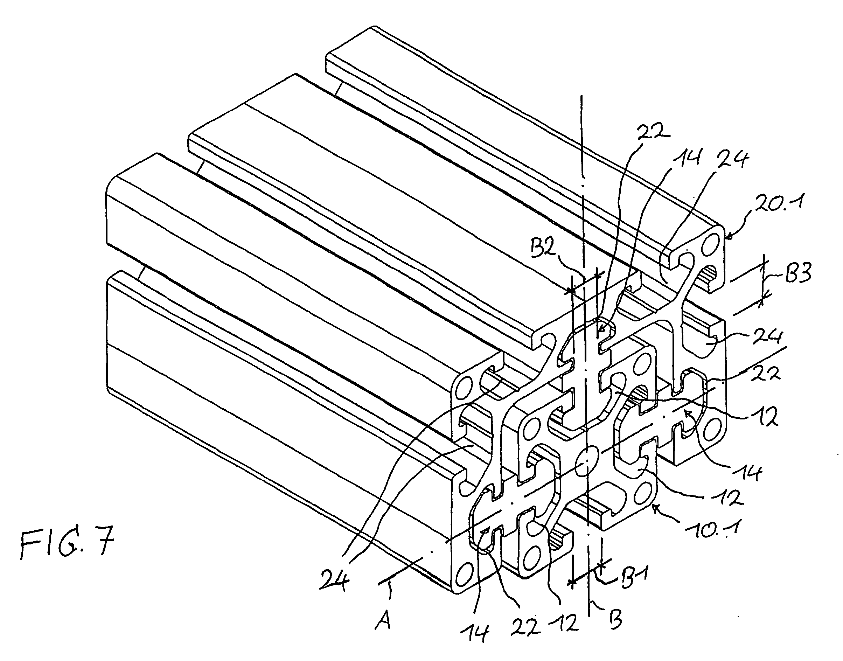

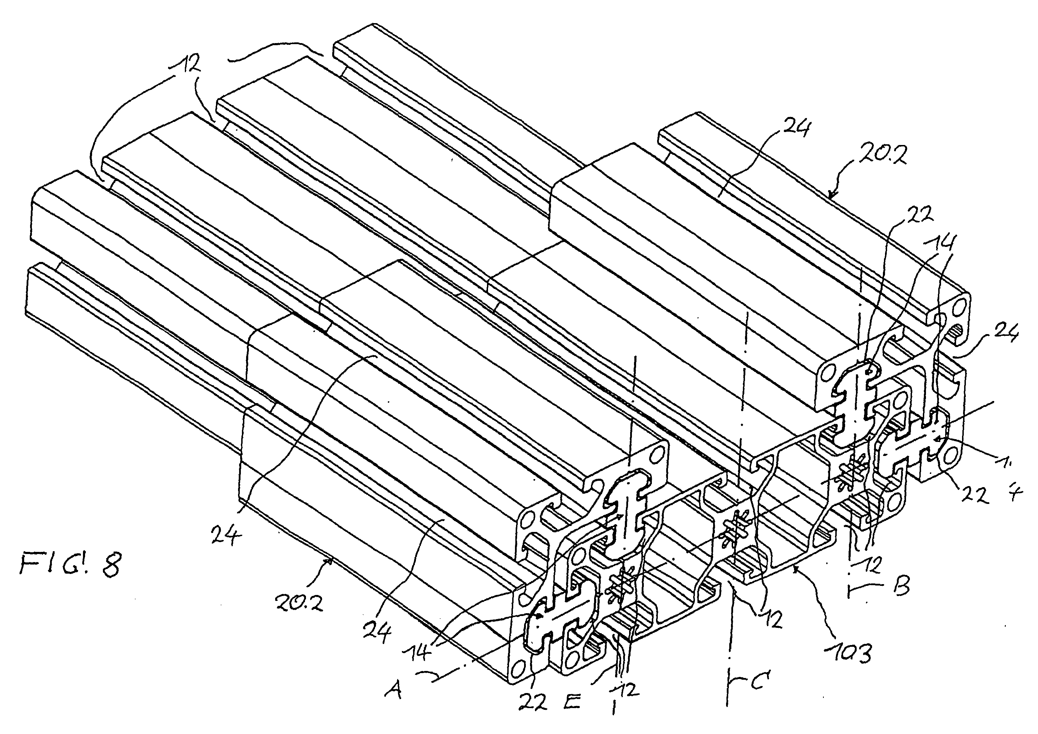

In Fig. 5 ist in einer Detailperspektive eine weitere Ausführungsform eines Schlittenprofils 20.2 dargestellt. Das Schlittenprofil 20.2 ist als L-Profil ausgebildet. In jedem Endbereich des Schenkels des L-Profils ist innenseitig eine Innenlängsnut 22 vorhanden. Versetzt zur Innenlängsnut 22 in Richtung des gemeinsamen Eckpunktes des L-förmigen Schlittenprofils 20.2 ist außenseitig jeweils eine hinterschnittene Außenlängsnut 24 eingeformt.

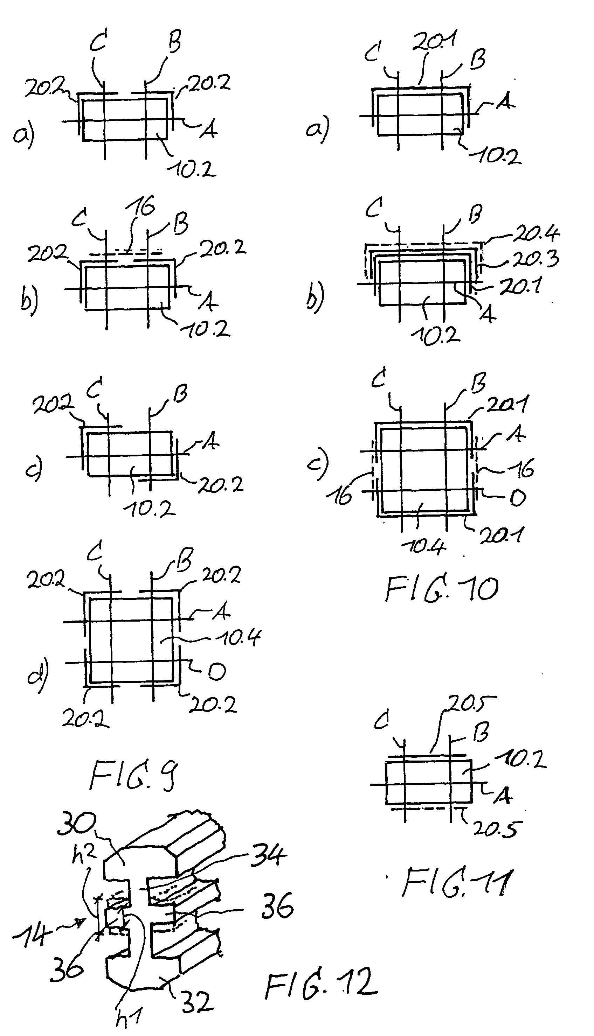

Das U-förmige Schlittenprofil 20.1 ist in Fig. 6 in einer Detailperspektive dargestellt.

In Fig. 8 ist in einer Perspektive der Einsatz zweier L-förmigen Schlittenprofile 20.2 gemäß Fig. 5 an einem flach angeordneten Profilstab 10.3 mit der horizontalen Systemachse A und drei vertikalen Systemachsen B, C, E dargestellt. Die L-förmigen Schlittenprofile 20.2 sind in Fig. 8 im linken oberen und rechten oberen Eckbereich längsverschieblich angeordnet. Die Innenlängsnute 22 befinden sich im linken Schlittenprofil 20.2 in den Systemachsen A und E und im rechten Schlittenprofil 20.2 in den Systemachsen A und B. Die Koppelung der L-förmigen Schlittenprofile 20.2 erfolgt, wie bereits beschrieben, über die Gleitführungsprofile 14.

In den Figuren 9a bis 9d, 10a bis 10c und 11 sind stark schematisiert unterschiedliche Anordnungsmöglichkeiten beziehungsweise Kombinationsmöglichkeiten von Schlittenprofilen 20.1, 20.2, 20.3, 20.4, 20.5 dargestellt. Die vorhandenen Außen- und Innenlängsnute und Gleitführungsprofile sind aus Übersichtlichkeitsgründen nicht näher dargestellt.

In Fig. 9a ist die beidseits oberseitige Anordnung eines L-förmigen Schlittenprofils 20.2 an einem Profilstab 10 dargestellt, der die horizontale Systemachse A und zwei vertikale Systemachsen B und C aufweist.

Fig. 9b entspricht der Anordnung gemäß Fig. 9a, wobei zusätzlich ein Koppelungsprofil 16, das gestrichelt dargestellt ist, oberseitig an die Schlittenprofile 20.2 angeschlossen ist, um deren Verschiebebewegung zu koppeln.

Fig. 9c zeigt die Anordnung zweier diametral gegenüberliegender L-förmiger Schlittenprofile 20.2 an dem Profilstab 10.

Fig. 9d zeigt die Anordnung von insgesamt vier L-förmigen Schlittenprofilen 20.2 an einem quadratischen Profilstab 10.4 mit den horizontalen Systemachsen A und D und den vertikalen Systemachsen B und C. In jedem Eckbereich des Profilstabs 10.4 ist ein Schlittenprofil 20.2 angeordnet.

Fig. 10a zeigt schematisch die Anordnung eines U-förmigen Schlittenprof ils 20.1 oberseitig an dem Profilstab 10.

Fig. 10b zeigt schematisch die oberseitige Anordnung von mehreren aufeinander längsverschieblich geführten U-förmigen Schlittenprofilen 20.1, 20.3, 20.4.

Fig. 10c zeigt die Anordnung eines oberseitigen und unterseitigen U-förmigen Schlittenprofils 20.1 an einem quadratischen Profilstab 10.4, wobei auch hier eine Koppelung der beiden Schlittenprofile 20.1 über seitlich angeordnete Koppelungsprofile 16 (gestrichelt dargestellt) möglich ist.

Fig. 11 zeigt schließlich eine weitere Ausführungsform eines Schlittenprofils 20.5, das als schmales Rechteckprofil ausgebildet ist und in den Systemachsen B und C an dem Profilstab 10 längsverschieblich angeordnet ist. Das Schlittenprofil 20.5 kann auch zusätzlich unterseitig vorhanden sein (gestrichelte Darstellung).

Die beschriebenen Schlittenprofile sind bevorzugt als stranggepresste Aluminiumprofile ausgebildet. Die Gleitführungsprofile werden bevorzugt aus einem Gleitkunststoff hergestellt.

In den Figuren 13a bis m ist der Einsatz unterschiedlicher Schlittenprofile 20... an unterschiedliche Profilstäbe 10... dargestellt, wobei die Profilstäbe einem bekannten Profilstabsystem entsprechen, das aus dem Rastermaß/Systemmaß 40 mm (Millimeter) beziehungsweise einem Vielfachen davon aufgebaut ist.

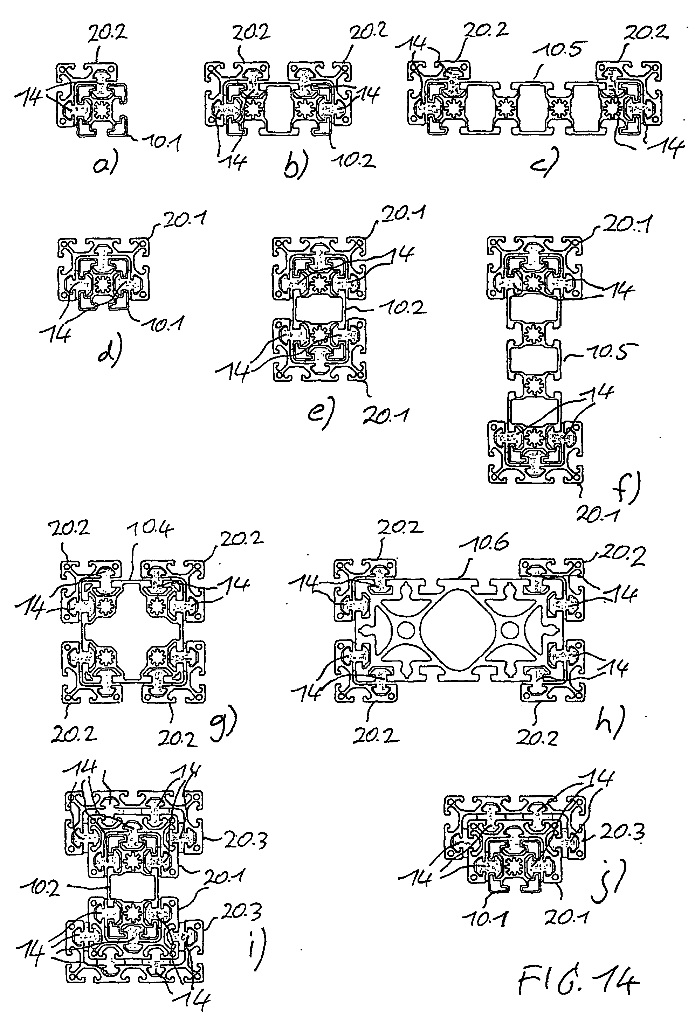

In den Figuren 14a bis i ist der Einsatz unterschiedlicher Schlittenprofile 20... an unterschiedliche Profilstäbe 10... dargestellt, wobei die Profilstäbe einem bekannten Profilstabsystem entsprechen, das aus dem Rastermaß/Systemmaß 45 mm (Millimeter) beziehungsweise einem Vielfachen davon aufgebaut ist.

Bei beiden Systemprofilen 10... gemäß Figur 13 und Figur 14 werden diesselben Schlittenprofile 20... eingesetzt. Der Ausgleich des unterschiedlichen Grundsystemmaßes wird durch den Einsatz verschiedener Gleitführungsprofile 14 bewirkt. Dies ist im einzelnen in den Figuren 15a und b dargestellt. Bei dem Grundsystem mit dem Rastermaß 40 mm (Millimeter) wird ein Gleitführungsprofil 14 eingesetzt, dessen Vorsprungprofil 36 eine Höhe H1 aufweist (Figur 15a). Bei dem in Figur 15b dargestellten System beträgt das Rastermaß 45 mm (Millimeter) beziehungsweise ein Vielfaches davon. Der Einsatz desselben Schlittenprofils 20.1 ist dadurch möglich, dass die Höhe H2 des Vorsprungprofils 36 des Gleitführungsprofils entsprechend vermindert ausgebildet ist.

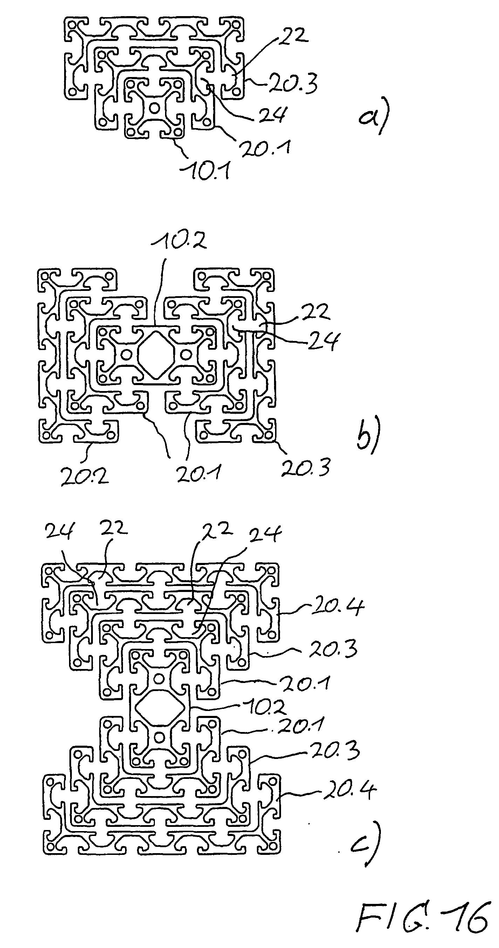

In den Figuren 16a, b und c sind drei Varianten von teleskopierbaren Schlittenprofilen 20... dargestellt. Die Teleskopierbarkeit wird dadurch gewährleistet, dass die Innenlängsnute 22 eines Schlittenprofils entsprechend den Rastermaßen der Außenlängsnut 24 des darunter befindlichen Schlittenprofils angeordnet sind. Die Gleitführungsprofile 14 sind in den Figuren 16a bis c nicht dargestellt.

Das beschriebene Schlittensystem gewährleistet eine hohe Variabilität. Die einzelnen Schlittenprofile weisen Innen- und Außensystemnute auf, die auf die Systemnute der Grundprofile abgestimmt sind. Eine Kombination der Schlittenprofile mit Profilstäben und eine Kombination von Schlittenprofilen untereinander ist problemlos umsetzbar. Weiterhin gewährleistet das beschriebene Schlittensystem, dass unterschiedliche Profilstabgrundsysteme angewandt werden können. Das beschriebene Schlittensystem ist beispielsweise geeignet, in dem bekannten Profilstabgrundsystem der 40er Reihe mit 8er Nuten eingesetzt zu werden. Die gleichen Schlittenprofile können auch bei dem bekannten Grundsystem der 45er Baureihe mit 10er Nuten eingesetzt werden. Hierzu muss lediglich ein abgewandeltes Gleitführungsprofil eingesetzt werden. Die Schlittenprofile selbst bleiben unverändert.

## Patentansprüche

1. Schlittensystem für einen Profilstab (10, 10.1, 10.2, 10.3), insbesondere stranggepressten Leichtmetallstab, der in vorgegebenen Systemquerschnittsachsen (A, B, C, D, E) in seiner jeweiligen oder zumindest einer Außenseite eine hinterschnittene Längsnut (12) mit einer vorgegebenen Nutbreite (B1) aufweist, mit zumindest einem in Profilstablängsrichtung verschieblich an den Profilstab (10) angeschlossenen Schlittenprofil (20.1, 20.2, ...), wobei
- zumindest ein Schlittenprofil (20.1, 20.2, ...) vorhanden ist, das zumindest eine hinterschnittene Innenlänganut (22) aufweist, die bei an den Profilstab (10) angeschlossenem Schlittenprofil (20.1, 20.2, ...) in einer der Systemquerschnittsachsen (A, B, C, D) angeordnet ist,
- zumindest ein Gleitführungsprofil (14) vorhanden ist, das eine Längsnut (12) des Profilstabes (10, 10.1, 10.2, ...) und die entsprechende gegenüberliegende Innenlängsnut (12) des Schlittenprofils (20.1, 20.2, ...) hintergreift,
- das Schlittenprofil (20.1, 20.2, ...) auf der der zumindest einen Innenlängsnut (22) gegenüberliegenden Außenseite des Schlittenprofils (20.1, 20.2, ...) zumindest eine hinterschnittene Außenlängsnut (24) aufweist,
- die Kontur, das heißt die Breite (B3) und die Höhe (H3), der Außenlängsnut (24) des Schlittenprofils (20.1, 20.2, ...) der Kontur, das heißt der Breite (B1) und der Höhe (H1), der Längsnut (12) des Profilstabes (10, 10.1, 10.2, ...) entspricht,
**dadurch gekennzeichnet, dass**
- das Schlittenprofil (20.1) als U-Profil ausgebildet ist, wobei
-- zumindest eine Innenlängsnut (22) am Steg und zumindest jeweils eine Innenlängsnut (22) am Flansch des Schlittenprofils (20.1) und
-- am Steg zumindest zwei Außenlängsnute (24) und am Flansch zumindest jeweils eine Außenlängsnut (24) vorhanden sind,
oder
- das Schlittenprofil (20.2) als L-Profil ausgebildet ist, wobei
-- zumindest eine Innenlängsnut (22) pro Schenkel des L-Profils und
-- in jedem Schenkel zumindest eine Außenlängsnut (24) vorhanden ist,
- die Außenlängsnut (24) oder Außenlängsnute (24), im Querschnitt des Schlittenprofils (20.1, 20.2, ...) gesehen, versetzt zu der/den Innenlängsnut/en (22) angeordnet sind, und
- die Außenlängsnut/Außenlängsnute (24) bei an den Profilstab angeschlossenem Schlittenprofil in einem Systemmaß (R2, BA) vorhanden sind, das dem Systemmaß (RS) oder einem ganzzahligen Vielfachen Systemmaß des Profilstabes (10) entspricht.

2. Schlittensystem nach Anspruch 1,
**dadurch gekennzeichnet, dass**
- die Kontur, das heißt die Breite (B2) und auch die Höhe (H2), der Innenlängsnut (12) des Schlittenprofils (20.1, 20.2, ...) geringer ist als die Kontur, das heißt die Breite (B1) und die Höhe (H1), der Längsnut (12) des Profilstabes (10, 10.1, 10.2, ...).

3. Schlittensystem nach einem der vorstehenden Ansprüche,
**dadurch gekennzeichnet, dass**
- das Rastermaß (R1) benachbarter Innenlängsnute (22) dem Rastermaß (R2) benachbarter Außenlängsnute (24) entspricht.

4. Schlittensystem nach einem der vorstehenden Ansprüche,
**dadurch gekennzeichnet, dass**
- an das Schlittenprofil (20.1, 20.2) oberseitig und/oder unterseitig zumindest ein weiteres Schlittenprofil (20.3, 20.4) längsverschieblich angeordnet ist.

5. Schlittensystem nach einem der vorstehenden Ansprüche,
**dadurch gekennzeichnet, dass**
- das Gleitführungsprofil (14) im oberen und unteren Querschnittsbereich ein Nutensteinprofil (30, 32) aufweist, das jeweils die entsprechende Nut (12) am Profilstab (10...) oder Schlitten (20...) hintergreift.

6. Schlittensystem nach Anspruch 5,
**dadurch gekennzeichnet, dass**
- im Stegbereich (34) zwischen dem oberen und unteren Querschnittsbereich des Gleitführungsprofils (14) jeweils ein senkrecht zum Steg (34) angeordnetes Vorsprungprofil (36) angeschlossen beziehungsweise angeformt ist, das insbesondere einen Rechteckquerschnitt aufweist.

7. Schlittensystem nach einem der vorstehenden Ansprüche,
**dadurch gekennzeichnet, dass**
- der Profilstab (10, 10.1, 10.2) als Rechteck- oder Quadratprofil ausgebildet ist und ein L-förmiges Schlittenprofil (20.2) am oberen rechten und/oder oberen linken und/oder am unteren rechten und/oder unteren linken Eckbereich des Profilstabes (10, 10.1, 10.2) längsverschieblich angeordnet ist.

8. Schlittensystem nach einem der Ansprüche 1 bis 6,
**dadurch gekennzeichnet, dass**
- der Profilstab (10, 10.1, 10.2) als Rechteck- oder Quadratprofil ausgebildet ist und ein U-förmiges Schlittenprofil (20.1, 20.3, 20.4) oberseitig und/oder unterseitig an dem Profilstab (10, 10.1, 10.2) längsverschieblich angeordnet ist.

9. Schlittensystem nach einem der vorstehenden Ansprüche,
**dadurch gekennzeichnet, dass**
- ein Koppelungsprofil (16) vorhanden ist, das an dem Profilstab (10, 10.1, 10.2) längsverschieblich benachbarte vorhandene Schlittenprofile (20.1, 20.2, 20.3, 20.4) miteinander koppelt.

10. Schlittensystem nach einem der vorstehenden Ansprüche,
**dadurch gekennzeichnet, dass**
- das Schlittenprofil (20.1, 20.2, ...) als stranggepresstes Leichtmetallprofil ausgebildet ist.

11. Schlittensystem nach einem der vorstehenden Ansprüche,
**dadurch gekennzeichnet, dass**
- das Gleitführungsprofil (14) aus Kunststoff ausgebildet ist.

12. Schlittensystem nach einem der vorstehenden Ansprüche,
**dadurch gekennzeichnet, dass**
- an dem Profilstab (10) eine Kombination von L-förmigen und/oder U-förmigen und/oder rechteckförmigen Schlittenprofilen angeordnet ist.

13. Schlittensystem nach einem der Ansprüche 1, 3 bis 12,
**dadurch gekennzeichnet, dass**
- die Kontur, das heißt die Breite und Höhe, der Innenlängsnut des Schlittenprofils der Kontur der Längsnut des Profilstabes entspricht.

## Claims

1. A slide system for a profiled bar (10, 10.1, 10.2, 10.3), in particular an extruded lightweight metal bar, which, in predefined system cross-sectional axes (A, B, C, D, E), in its respective or at least one outer side, has an undercut longitudinal groove (12) with a predefined groove width (B1), having at least one slide profile (20.1, 20.2, ...) which is connected to the profiled bar (10) such that it can be displaced in the profiled bar longitudinal direction,
- there being at least one slide profile (20.1, 20.2, ...) which has at least one undercut internal longitudinal groove (22) which, when the slide profile (20.1, 20.2, ...) is connected to the profiled bar (10), is arranged in one of the system cross-sectional axes (A, B, C, D),
- there being at least one sliding guide profile (14) which engages behind a longitudinal groove (12) of the profiled bar (10, 10.1, 10.2, ...) and the corresponding opposite internal longitudinal groove (12) of the slide profile (20.1, 20.2, ...),
- the slide profile (20.1, 20.2, ...) having at least one undercut external longitudinal groove (24) on the outer side of the slide profile (20.1, 20.2, ...) lying opposite the at least one internal longitudinal groove (22),
- the contour, that is to say the width (B3) and the height (H3), of the external longitudinal groove (24), of the slide profile (20.1, 20.2, ...) corresponding to the contour, that is to say the width (B1) and the height (H1), of the longitudinal groove (12) of the profiled bar (10, 10.1, 10.2, ...),
**characterized in that**
- the slide profile (20.1) is formed as a U profile,
-- there being least one internal longitudinal groove (22) on the web and at least one internal longitudinal groove (22) in each case on the flange of the slide profile (20.1) and
-- there being at least two external longitudinal grooves (24) on the web and at least one external longitudinal groove (24) in each case on the flange,
or
- the slide profile (20.2) being formed as an L profile,
-- there being at least one internal longitudinal groove (22) per leg of the L profile and
-- there being at least one external longitudinal groove (24) in each leg,
- the external longitudinal groove/external longitudinal grooves (24), as viewed in cross section of the slide profile (20.1, 20.2, ...), being arranged to be offset with respect to the internal longitudinal groove/s (22), and
- when the slide profile is connected to a profiled bar, the external longitudinal groove/external longitudinal grooves (24) being present in a system dimension (R2, BA) which corresponds to the system dimension (RS) or an integer multiple of the system dimension of the profiled bar (10).

2. The slide system as claimed in claim 1, **characterized in that**
- the contour, that is to say the width (B2) and also the height (H2), of the internal longitudinal groove (12) of the slide profile (20.1, 20.2, ...) is less than the contour, that is to say the width (B1) and the height (H1), of the longitudinal groove (12) of the profiled bar (10, 10.1, 10.2, ...).

3. The slide system as claimed in one of the preceding claims, **characterized in that**
- the grid dimension (R1) of adjacent internal longitudinal grooves (22) corresponds to the grid dimension (R2) of adjacent external longitudinal grooves (24).

4. The slide system as claimed in one of the preceding claims, **characterized in that**
- at least one further slide profile (20.3, 20.4) is arranged such that it can be displaced longitudinally on the upper side and/or underside of the slide profile (20.1, 20.2).

5. The slide system as claimed in one of the preceding claims, **characterized in that**
- the sliding guide profile (14) has, in the upper and lower cross-sectional areas, a grooved block profile (30, 32) which in each case engages behind the corresponding groove (12) on the profiled bar (10...) or slide (20...).

6. The slide system as claimed in claim 5, **characterized in that**
- in the web region (34), between the upper and lower cross-sectional areas of the sliding guide profile (14), in each case a protruding profile (36) which, in particular, has a rectangular cross section arranged perpendicular to the web (34) is connected or integrally molded on.

7. The slide system as claimed in one of the preceding claims, **characterized in that**
- the profiled bar (10, 10.1, 10.2) is formed as a rectangular or square profile and an L-shaped slide profile (20.2) is arranged such that it can be displaced longitudinally at the upper right and/or upper left and/or at the lower right and/or lower left corner region of the profiled bar (10, 10.1, 10.2).

8. The slide system as claimed in one of claims 1 to 6, **characterized in that**
- the profiled bar (10, 10.1, 10.2) is formed as a rectangular or square profile and a U-shaped slide profile (20.1, 20.3, 20.4) is arranged such that it can be displaced longitudinally on the upper side and/or lower side of the profiled bar (10, 10.1, 10.2).

9. The slide system as claimed in one of the preceding claims, **characterized in that**
- there is a coupling profile (16) which couples to one another adjacent slide profiles (20.1, 20.2, 20.3, 20.4) which are present and can be displaced longitudinally on the profiled bar (10, 10.1, 10.2).

10. The slide system as claimed in one of the preceding claims, **characterized in that**
- the slide profile (20.1, 20.2, ...) is formed as an extruded lightweight metal profile.

11. The slide system as claimed in one of the preceding claims, **characterized in that**
- the sliding guide profile (14) is formed of plastic.

12. The slide system as claimed in one of the preceding claims, **characterized in that**
- a combination of L-shaped and/or U-shaped and/or rectangular slide profiles is arranged on the profiled bar (10).

13. The slide system as claimed in one of claims 1, 3 to 12,
**characterized in that**
- the contour, that is to say the width and height, of the internal longitudinal groove of the slide profile corresponds to the contour of the longitudinal groove of the profiled bar.

## Revendications

1. Système de coulisses pour une barre profilée (10, 10.1, 10.2, 10.3), notamment une barre profilée venue d'extrusion en un métal léger et munie selon des axes préétablis (A, B, C, D, E) dans la section transversale d'un système, dans sa face externe considérée ou au moins dans une face externe, d'une rainure longitudinale contre-dépouillée (12) présentant une largeur préétablie (B1), comportant au moins un profilé coulissant (20.1, 20.2, ...) rattaché à la barre profilée (10) avec faculté de coulissement dans la direction longitudinale de ladite barre profilée, système dans lequel
- il est prévu au moins un profilé coulissant (20.1, 20.2, ...) pourvu d'au moins une rainure longitudinale intérieure contre-dépouillée (22) qui, lorsque ledit profilé coulissant (20.1, 20.2, ...) est rattaché à la barre profilée (10), est agencée selon l'un des axes (A, B, C, D) de la section transversale du système,
- il est prévu au moins un profilé (14) à guidage glissant, emprisonnant par-derrière une rainure longitudinale (12) de la barre profilée (10, 10.1, 10.2, ...) et la rainure longitudinale intérieure correspondante (12) du profilé coulissant (20.1, 20.2, ... ), située en vis-à-vis,
- le profilé coulissant (20.1, 20.2, ...) possède au moins une rainure longitudinale extérieure contre-dépouillée (24) sur la face externe dudit profilé coulissant (20.1, 20.2, ...) qui est située en vis-à-vis de la rainure longitudinale intérieure (22) prévue au minimum,
- la configuration, c'est-à-dire la largeur (B3) et la hauteur (H3) de la rainure longitudinale extérieure (24) du profilé coulissant (20.1, 20.2, ...) correspond à la configuration, c'est-à-dire à la largeur (B1) et à la hauteur (H1) de la rainure longitudinale (12) de la barre profilée (10, 10.1, 10.2, ...),
**caractérisé par le fait que**
- le profilé coulissant (20.1) est réalisé sous la forme d'un profilé en U, sachant
-- qu'au moins une rainure longitudinale intérieure (22), et au moins une rainure longitudinale intérieure respective (22), sont respectivement pratiquées sur l'âme et sur l'aile du profilé coulissant (20.1), et
-- au moins deux rainures longitudinales extérieures (24), et au moins une rainure longitudinale extérieure respective (24), sont respectivement pratiquées sur l'âme et sur l'aile,
ou
- le profilé coulissant (20.2) est réalisé sous la forme d'un profilé en L, sachant
-- qu'au moins une rainure longitudinale intérieure (22) est prévue sur chaque branche du profilé en L, et
-- au moins une rainure longitudinale extérieure (24) est prévue dans chaque branche,
- la rainure longitudinale extérieure (24) ou les rainures longitudinales extérieures (24) est (sont) agencée(s), observée(s) en coupe transversale du profilé coulissant (20.1, 20.2, ...), avec décalage vis-à-vis de la (des) rainure(s) longitudinale(s) intérieure(s) (22), et
- la rainure longitudinale extérieure/les rainures longitudinales extérieures (24) est (sont) disposée(s), lorsque ledit profilé coulissant est rattaché à la barre profilée, selon une cote de système (R2, BA) qui correspond à la cote de système (RS) ou à un multiple entier de la cote de système de la barre profilée (10).

2. Système de coulisses selon la revendication 1,
**caractérisé par le fait que**
- la configuration, c'est-à-dire la largeur (B2) et également la hauteur (H2) de la rainure longitudinale intérieure (12) du profilé coulissant (20.1, 20.2, ...), est plus petite que la configuration, c'est-à-dire la largeur (B1) et la hauteur (H1) de la rainure longitudinale (12) de la barre profilée (10, 10.1, 10.2, ...).

3. Système de coulisses selon l'une des revendications précédentes,
**caractérisé par le fait que**
- la cote modulaire (R1) de rainures longitudinales intérieures (22) voisines correspond à la cote modulaire (R2) de rainures longitudinales extérieures (24) voisines.

4. Système de coulisses selon l'une des revendications précédentes,
**caractérisé par le fait**
- **qu'**au moins un profilé coulissant supplémentaire (20.3, 20.4) est agencé, avec faculté de coulissement longitudinal, à la face supérieure et/ou à la face inférieure du profilé coulissant (20.1, 20.2).

5. Système de coulisses selon l'une des revendications précédentes,
**caractérisé par le fait que**
- le profilé (14) à guidage glissant présente, dans ses zones de section transversale supérieure et inférieure, un coulisseau (30, 32) emprisonnant, par-derrière, la rainure correspondante (12) respectivement située sur la barre profilée (10...) ou sur la coulisse (20...).

6. Système de coulisses selon la revendication 5,
**caractérisé par le fait que**,
- dans la région de l'âme (34) entre les zones de section transversale supérieure et inférieure du profilé (14) à guidage glissant, une protubérance profilée (36), disposée perpendiculairement à l'âme (34) et notamment munie d'une section transversale rectangulaire, est respectivement rattachée ou venue de moulage solidaire.

7. Système de coulisses selon l'une des revendications précédentes,
**caractérisé par le fait que**
- la barre profilée (10, 10.1, 10.2) est réalisée sous la forme d'un profilé rectangulaire ou carré; et un profilé coulissant (20.2) configuré en L est agencé, à coulissement longitudinal, dans la zone d'angle supérieure de droite et/ou de gauche, et/ou dans la zone d'angle inférieure de droite et/ou de gauche de ladite barre profilée (10, 10.1, 10.2).

8. Système de coulisses selon l'une des revendications 1 à 6,
**caractérisé par le fait que**
- la barre profilée (10, 10.1, 10.2) est réalisée sous la forme d'un profilé rectangulaire ou carré ; et un profilé coulissant (20.1, 20.3, 20.4) configuré en U est agencé, à coulissement longitudinal, à la face supérieure et/ou à la face inférieure de ladite barre profilée (10, 10.1, 10.2).

9. Système de coulisses selon l'une des revendications précédentes,
**caractérisé par**
- la présence d'un profilé d'accouplement (16) accouplant mutuellement des profilés coulissants (20.1, 20.2, 20.3, 20.4) voisins, pouvant coulisser longitudinalement sur la barre profilée (10, 10.1, 10.2).

10. Système de coulisses selon l'une des revendications précédentes,
**caractérisé par le fait que**
- le profilé coulissant (20.1, 20.2, ...) est réalisé sous la forme d'un profilé venu d'extrusion en un métal léger.

11. Système de coulisses selon l'une des revendications précédentes,
**caractérisé par le fait que**
- le profilé (14) à guidage glissant est réalisé en matière plastique.

12. Système de coulisses selon l'une des revendications précédentes,
**caractérisé par le fait**
- **qu'**une combinaison de profilés coulissants configurés en L et/ou configurés en U et/ou rectangulaires est disposée sur la barre profilée (10).

13. Système de coulisses selon l'une des revendications 1, 3 à 12,
**caractérisé par le fait que**
- la configuration, c'est-à-dire la largeur et la hauteur de la rainure longitudinale intérieure du profilé coulissant correspond à la configuration de la rainure longitudinale de la barre profilée.
